Europäisches Patentamt

European Patent Office

Office européen des brevets

(19)

(11) Publication number: **0 341 356 B1**

## EUROPEAN PATENT SPECIFICATION

(12)

(45) Date of publication of patent specification :
08.01.92 Bulletin 92/02

(51) Int. Cl.$^5$: **A01K 63/04**, B01D 24/00

(21) Application number: **88304283.0**

(22) Date of filing: **11.05.88**

---

(54) **Filtering device.**

---

(43) Date of publication of application:
**15.11.89 Bulletin 89/46**

(45) Publication of the grant of the patent:
**08.01.92 Bulletin 92/02**

(84) Designated Contracting States:
**DE FR GB IT NL**

(56) References cited:
**EP-A- 0 212 975
CA-A- 1 231 871
DE-C- 320 611
DE-C- 646 476
FR-A- 1 275 586
US-A- 2 595 965**

(73) Proprietor: **SUISAKU KABUSHIKI KAISHA
19-go, 24-ban Hon Isshiki-cho 3-chome
Edogawa-ku
Tokyo (JP)**

(72) Inventor: **Ogawa, Yonekichi
4-5-3, Nakameguro
Meguro-ku Tokyo (JP)**

(74) Representative: **Driver, Virginia Rozanne et al
Haseltine Lake & Co. Hazlitt House 28
Southampton Buildings Chancery Lane
London WC2A 1AT (GB)**

---

Jouve, 18, rue Saint-Denis, 75001 PARIS

## Description

The present invention relates to a filtering device as described in the preamble of claim 1. A known filtering device comprises a water suction case having a plurality of water suction ports connected to water flow passages formed therein so as to make gravel spread over the bottom of a water tank perform a filtering operation, the case being buried in the gravel and a pumping device being connected to the water suction case so as to draw water through the case to the upper part of the tank.

Such conventional filtering devices are generally used as tank floor filtering devices using the gravel as the filtering material, and the plurality of water suction ports have heretofore been located on the upper surface of a water suction case of flat box shape e.g., Japanese Patent Laid-open No.172322/1985 or of tube like conduits, e.g. CA-A-1231871.

However, when burying the water suction case in the gravel in the above-mentioned conventional filtering device, it is difficult to do so after the gravel has already been spread over the bottom of a water tank. Therefore, it is necessary to introduce gravel into the tank after the water suction case has been positioned. Further, since the water suction ports are directly covered with the gravel, the suction ports can feasibly become blocked.

It is therefore desirable to provide a filtering device having suction ports as described above and of which at least a part of the device may be buried in gravel spread over the bottom of a water tank and which can prevent the suction ports from becoming blocked with gravel as far as possible.

According to the present invention, there is provided a filtering device adapted to be inserted in a particulate filtering medium arranged over the base of a water tank, the device comprising a substantially coplanar arrangement of water flow conduits defining passages interconnected in fluid communication to define spaces between the passages, wherein each conduit has a plurality of apertures through which water filtered by the particulate filtering medium can enter the passages concerned by suction, characterised in that the device has for each conduit a lower, insertion, portion provided with said apertures and an upper, flanged, portion cooperating with the lower insertion portion to define a cavity in the particulate filtering medium to assist flow of water through said apertures.

For a better understanding of the present invention and to show how the same may be carried into effect, reference will now be made, by way of example, to the accompanying drawings, in which :

FIGURES 1-12 illustrate one embodiment of the present invention, wherein

FIGURE 1 is a perspective view of the whole of a filtering arrangement ;

FIGURE 2 is an enlarged sectional view taken along the lines II-II of Figure 1 ;

FIGURE 3 is a sectional view taken along the line III-III of Figure 2 ;

FIGURE 4 is an enlarged sectional view taken along the line IV-IV of Figure 3 ;

FIGURE 5 is an enlarged sectional view taken along the line V-V of Figure 3 ;

FIGURE 6 is a sectional view taken along the line VI-VI of Figure 4 ;

FIGURE 7 is an underneath view of a water suction case ;

FIGURE 8 is a sectional view taken along the line VIII-VIII of Figure 2 ;

FIGURE 9 is a sectional view taken along the line IX-IX of Figure 8 ;

FIGURE 10 ; is a sectional view taken along the line X-X of Figure 2 ;

FIGURE 11 is an enlarged perspective view of part of water suction case ;

FIGURE 12 is a sectional view corresponding to Figure 4 showing the attaching procedure of a filtering case ; and

FIGURE 13 is a plan view of another embodiment of the present invention.

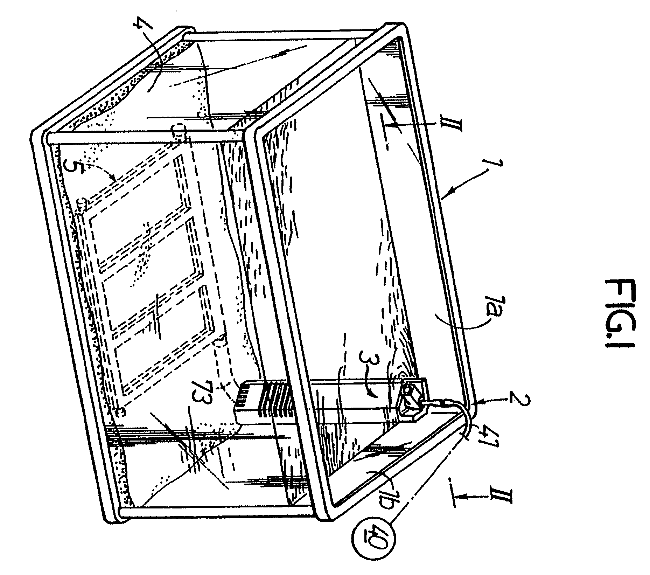

Referring first to Figure 1, there is shown a tank 1 of a box-like shape for use as an aquarium for fish such as goldfish, tropical fish and even saltwater fish. A filtering case 3 is attached to a corner 2 of the tank 1 formed by two side walls 1a and 1b, intersecting at a right angle. A filtering device in the form of a water suction case 5 is located in the bottom of the tank 1 so as to be buried in a particulate filtering medium in the form of gravel 4 spread over the bottom thereof. Water drawn through the gravel 4 and filtered is introduced from the water suction case 5 into the filter case 3, and is further circulated together with water filtered through the filtering case 3 to the upper part in the tank 1.

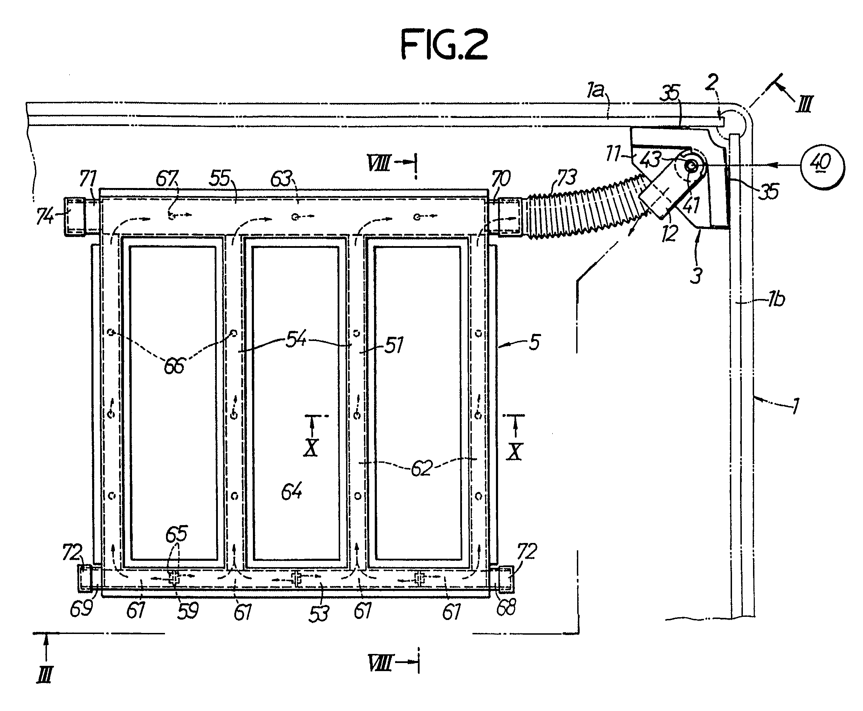

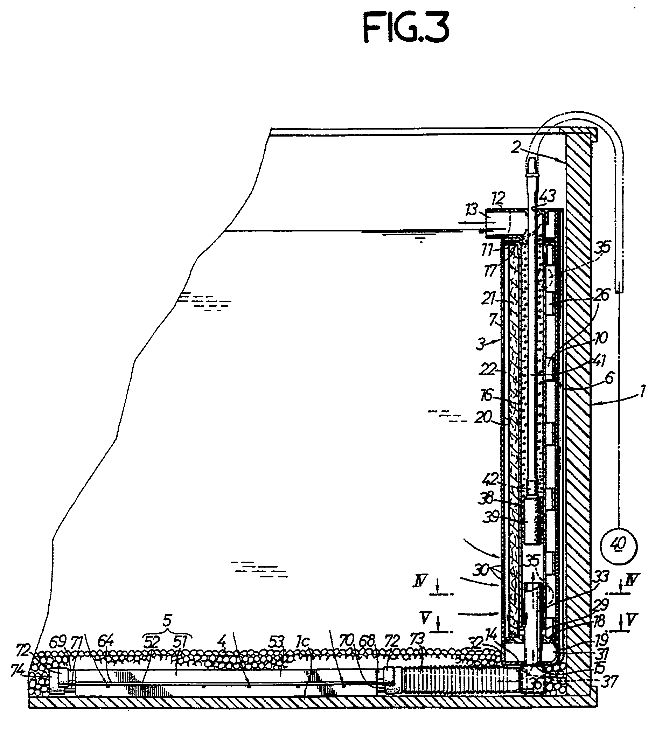

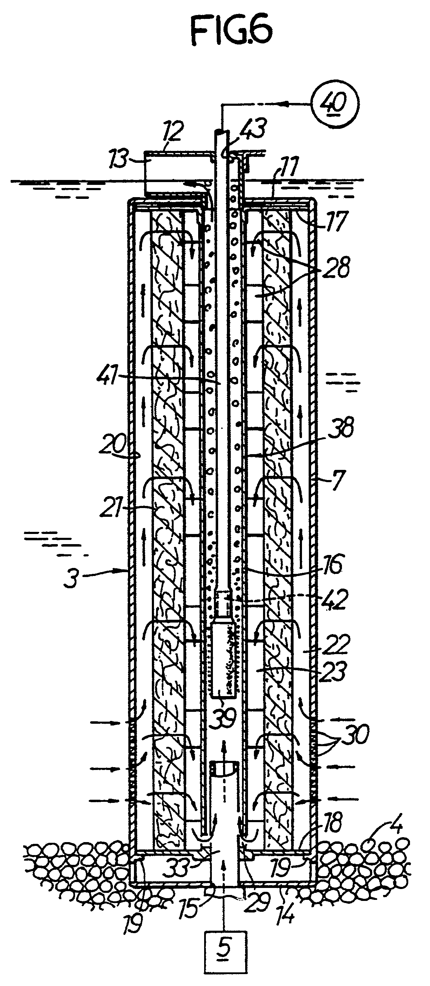

Referring also to Figures 2 to 6, the filter case 3 of, for example, synthetic resin, is formed into a cylindrical shape having such a cross-sectional configuration that a back wall 6 disposed to face into the corner 2 and a front wall 7 disposed to face inwardly of the tank in use are interconnected to form a closed section.

The back wall 6 comprises a pair of mounting portions 8 and 9 interconnected by a connecting portion 10. The mounting portions 8 and 9 are disposed at an angle slightly larger than the angle formed by the side surfaces 1a and 1b of the water tank 1, i.e., 90 degree, and the connecting portion 10 is shaped into a circular arc which is convex away from the corner 2. On the other hand, the front wall 7 is shaped into a trapezoid converging inwardly of the tank 1 such that both side ends of the front wall 7 and the outer ends of the mounting portions 8 and 9 of the back wall 6 overlap and interconnect.

A top plate 11 is provided integrally with the upper end of the front wall 7 to close the upper end of the filter case 3 when connected to the back wall 6. An outflow pipe 12 is provided at the centre of the top plate 11 with the inner end of the outflow pipe 12 projecting slightly into the filter case 3 and the pipe 12 is bent inwardly of the water tank 1 to form an outflow port 13. Plate portions are provided at the lower ends of the front and back walls 7 and 6 so as to form a lower plate 14 for closing the lower end of the filter case 3. An aperture 15 is formed in the centre of the lower plate 14.

A vertical suction pipe 16 extends along the centre of the filter case 3. More specifically, supporting plates 17 and 18 of a shape corresponding to that of the inner surface of the cross-section of the filter case 3 are attached integrally to the upper and lower ends of the suction pipe 16. Supporting collars 19 project from the lower inner surfaces of the back and front walls 6 and 7 so as to support the supporting plate 18, and the supporting plate 18 is supported by the supporting collars 19 in a position that the upper supporting plate 17 abuts the top plate 11. In this way the suction pipe 16 is secured in the filtering case 3. Further, the inner end of the outflow pipe 12 is fitted to the upper end of the suction pipe 16 so that the suction pipe 16 communicates with the outflow port 13.

A filtering chamber 20 is defined between both the supporting plates 17 and 18 in the filter case 3. The filtering chamber 20 is divided into an outer unpurified chamber 22 and an inner purifying chamber 23 by filtering material 21 attached to the suction pipe 16.

A pair of supporting arms 24 and 25 project towards the interconnection between the back and front walls 6 and 7 at a plurality of, e.g. seven, positions along the length of the suction pipe 16, and a supporting arm 26 projects towards connecting portion 10 of the back wall 6. A small-diameter shaft 27 extending in parallel with the suction pipe 16 is formed in the tips of both the supporting arms 24 and 25, and a connecting portion 28 shaped to correspond to the connecting portion 10 of the back wall 6 and formed so as to extend slightly from both side ends of the connecting portion 10 in parallel with both the mounting portions 8 and 9, is integrally formed at the tip end of the supporting arm 26. The connecting portion 28 abuts the inner surface of the connecting portion 10 and both the mounting portions 8 and 9.

The filtering material 21 is formed in a rectangular mat-like shape, and is wound on the supporting arms 24, 25, 26 of the suction pipe 16, abutting at both longitudinal ends of the pipe 16 with the supporting plates 27 and 18. The longitudinal faces of the filtering material 21 engage with the connecting portions 28 and the material curves around the tips of both supporting arms 25 and 25.

As described above, the suction pipe 16 on which the filtering material 21 is arranged, is attached to the filter case 3 to divide the filtering chamber 20 over its entire longitudinal length, into the unpurified chamber 22 and the purifying chamber 23, the suction pipe 16 being disposed in the purifying chamber 23. In addition, a suction port 29 communicating with the lower portion of the purifying chamber 23 is provided in the lower portion of the suction pipe 16. A plurality of vertically spaced water intake ports 30 are formed in the lower portion of the front wall 7 of the filtering case 3 so as to communicate with the lower portion of the unpurified chamber 22.

A water intake chamber 31 is defined between the lower plate 14 of the filtering case 3 and the supporting plate 18 of the suction pipe 16, and a plurality of auxiliary water intake ports 32 of slit-like shape extending lengthwise of the device are provided at the lower portion of the front wall 7 to communicate with the water intake chamber 31.

The water intake chamber 31 and the auxiliary water intake ports 32 introduce a small amount of the water flowing around the filtering material 21 into the suction pipe 16, the aperture 15 being closed when the filter case 3 is solely used without the water suction case 5. However, when the filter case 3 and the water suction case 5 are used together as in the embodiment described above, a connecting pipe 33 for introducing the water from the water suction case 5 to the suction pipe 16 is inserted through the aperture 15 and is connected to the lower portion of the suction pipe 16, the auxiliary water intake ports 32 and the water intake chamber 31 not substantially functioning in the mode.

A pair of upper and lower recesses 34 are formed so as to be vertically spaced out on the outer surfaces of both the mounting portions 8 and 9 of the back wall 6, respectively. Suction pads 35 are fixedly mounted in the individual recesses 34 so as to project outward from the outer surfaces of the mounting portions 8 and 9.

The pipe 33 has a sucker 35 at its closed lower end. When the connecting pipe 33 is inserted through the aperture 15 and connected to the lower portion of the suction pipe 16, the suction pad 35 attaches to the bottom 1c of the tank 1. Further, a connecting port 37 is formed in the lower side of the connecting pipe 33.

In order to suck water from the purifying chamber 23 to the water intake port 13, a pumping device 38 is attached to the filter case 3. The pumping device 38 comprises the suction pipe 16, an air injecting member 39 positioned low in the suction pipe 16, an air pump as a pressurized air supply source 40, and a hose 41 for connecting the air injecting member 39 to the pressurized air supply source 40.

The air injecting member 39 comprises a gas-permeable material such as a foam synthetic resin formed into a cylindrical shape, and a connecting pipe 42 is provided integrally with the air injecting member 39.

The connecting pipe 42 is connected to the one end of the hose 41. The hose 41 extends upward in the suction pipe 16 to be led outward of the tank 1 from a water intake aperture 43 provided at the upper portion of the drain pipe 12, and is connected at the other end to the pressurized air supply source 40 disposed outside the water tank 1.

In such a pumping device 38, pressurized air is supplied from the pressurized air supply source 40, and is injected from the air injecting member 39 to form fine air bubbles which rise in the suction pipe 16 and the outflow pipe 12, thereby generating a rising stream of water in the suction pipe 16 which flows out of the filter case through the pipe 12.

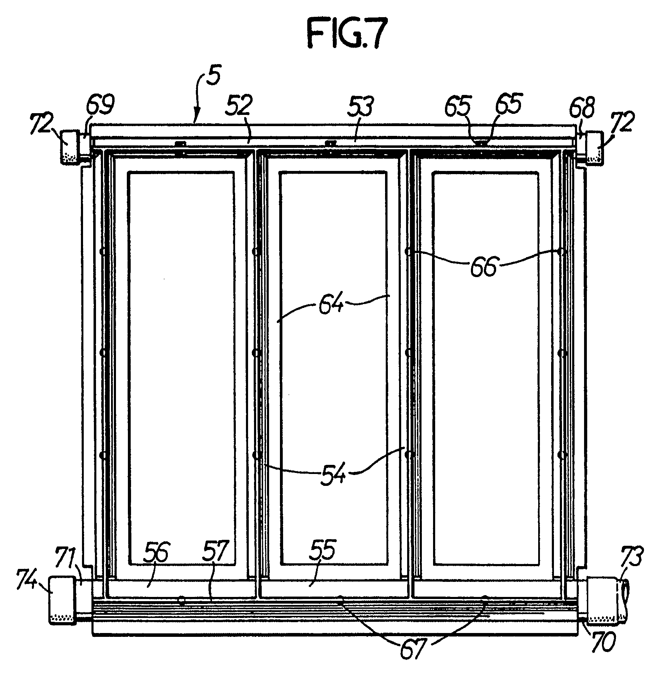

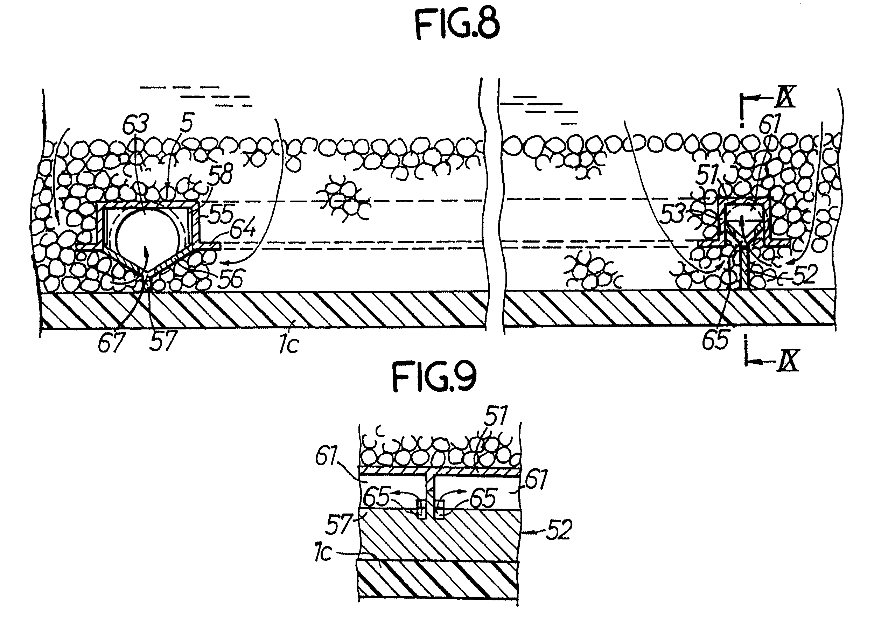

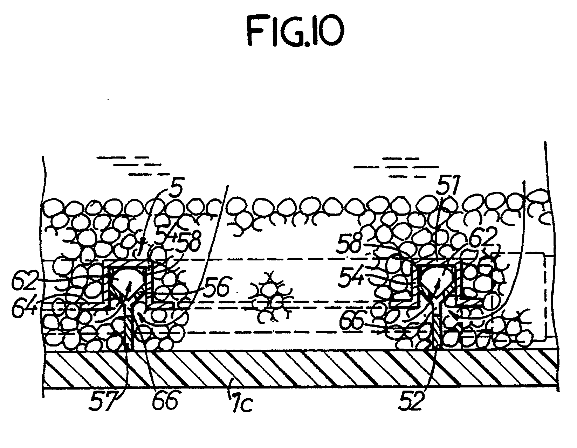

Referring also to Figures 7 to 10, the suction case 5 is constructed from an upper case member 51 and a lower case member 52 both of which are formed of synthetic resin and are fitted in to each other, the case comprises a first suction portion 53 extending linearly, a plurality of, e.g., four, second suction portions 54 disposed perpendicularly to the portion 53 at a plurality of, e.g., four positions therealong, the portions 54 being spaced, and a third suction portion 55 disposed parallel to the first suction portion 53 and commonly disposed perpendicularly to the second suction portions 54.

The upper case member 51 is formed of a substantially U shape cross-section at the first, second and third suction portions 53, 54, 55. The lower case 52 is Y shaped in form comprising a substantially V shaped upper part 56 opening to the cross-sectional shape of the suction portions 53, 54, 55 and a leg portion 57 formed integrally with the trough of the portion 56. The portion 56 is fitted in the upper case member 51. In addition, the part 56 carries projections 58 with a space thereamong to engage the upper end of the portion 56 in the upper case member 51.

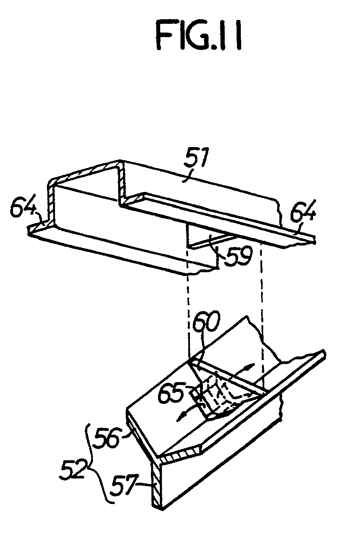

Referring also to Figure 11, partition plates 59 and 60 projecting respectively from the case members 51 and 52 and abutting each other, divide the interior of the first suction portion 53 into a plurality of spaces. Thus, a plurality of, e.g., four first passages 61 aligned longitudinally are formed in the first suction portion 53. A second passage 62 is formed in each of the second suction portions 54. The second suction portions 54 connect with the first suction portion 53 so that the second passages 62 individually communicate with the first passage 61. Further, a third passage 63 having a cross-sectional area larger than those of the first and second passage 61, 62 is formed in the third suction portion 55, and the second passages 62 communicate commonly with the third passage 63.

An integral flange 64 extends from both sides of the upper case member 51 at the lower edge thereof, and water suction ports 65, 66 and 67 are formed in the lower case member 52 under the flange 64. More specifically, small rectangular water suction ports 65 communicate on both sides of the partition plate 60 with the first passage 61 at the connection between the lower portion 56 and the leg portion 57. Small-diameter suction ports 66 communicate with the second passages 62 at a plurality of, e.g., three positions along the second water suction portion 54 again at the connection between the lower portion 56 and the leg portion 57. Further small-diameter water suction ports 67 are formed at a plurality of, e.g., three positions along the third water suction portion 55 at the connection between the portion 56 and the leg portion 57.

Semicircular projections are provided on the upper and lower case members 51 and 52 so as to form connecting portions 68 and 69 of short tube shape. Further, semicircular projections are provided on the upper and lower case members 51 and 52 so as to form further connecting portions 70 and 71.

Cylindrical caps 72 are fitted to the connection portions 68 and 69 at both ends of the first suction portion 53 so as to clamp the outer peripheries of the semicircular projections of the respective case members. One end of a flexible tube 73 is fitted to the connecting portion 70 at one end of the third suction portion 55 again to clamp the outer peripheries of the semicircular projections of the case members. The other end of the flexible tube 73 is connected to a connection part 37 of the connecting tube 33. A cylindrical cap 74 is fitted to the other end of the third suction portion 55 again to clamp the outer peripheries of the projecting portions. Therefore, the third passage 63 communicates at one end, through the flexible tube 73, with the connecting tube 33.

The caps 72, the flexible tube 73 and the cap 74, of course, secure the upper and lower case members together.

Description will now be made of the operation of this embodiment. In mounting such a filtering arrangement in the tank 1, the filter case 3 and the water suction case 5 are assembled and the connecting pipe 33 is secured to a bottom surface 1c of the tank 1. When the suction pads 36 are attached to the bottom surface 1c, the connecting tube 33 is secured to the bottom 1c in an upright position.

Then, the connecting tube 33 is inserted through the aperture 15 into the suction tube 16 to move up the filtering case 3, and the filter case 3 is secured by the suction pads 35 to the corner 2.

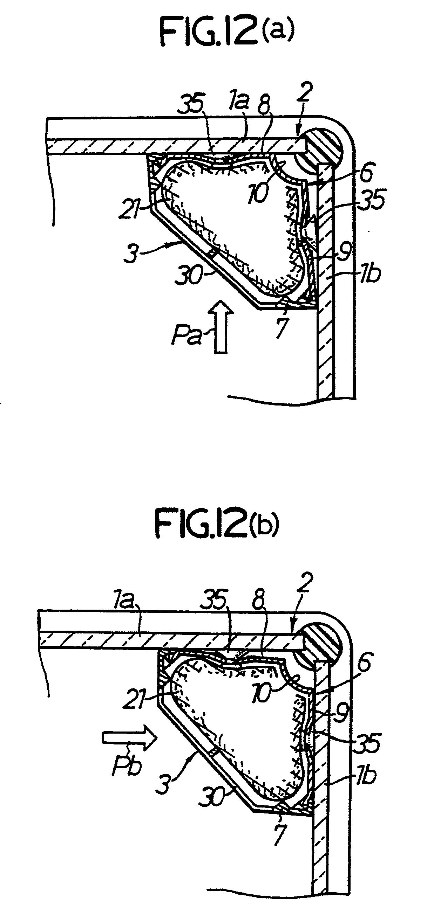

The mounting procedure of the filter case 3 to the corner 2 will be described with reference to Figures 12. As shown in Figure 12(a), one mounting portion 8 of the back wall 6 is first pressed toward one wall surface 1a in the direction of an arrow Pa so that the suction pads 35 attach to wall surface 1a. As shown in Figure 12(b), the other mounting portion 9 is pressed toward the other wall surface 1b in the direction of an arrow Pb so that the suction pads 35 attach to the wall surface 1b. In this case, since the angle α formed between the mounting portions 8 and 9 is larger than the angle formed between the wall surfaces 1a and 1b, one mounting portion 8 moves away at the connecting portion 10 from the wall surface 1a when the end portion at the side of the front wall 7 is pressed to the wall surface 1a, and a sealed space between the suction pads 35 and the wall surface 1a of the mounting portion 8 become depressurized. Therefore, the suction strength of the pads 35 increases reliably to secure the mounting portion 8 on the wall surface 1a.

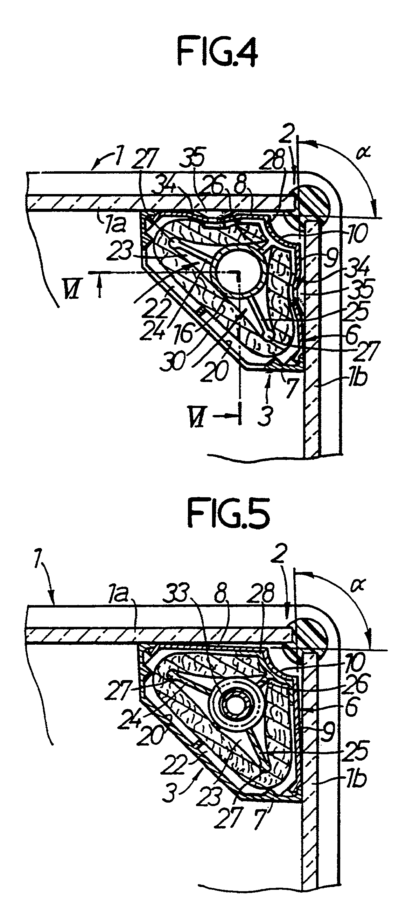

When the pressure on the mounting portion 9 is released, the mounting portion 9 contacts the end portion at the side of the front wall 7 with the wall surface 1b by the suction of the pads 35 on the side of the mounting portion 8 of the wall surface 1a so that the side of the connecting portion 10 is moved away from the wall surface 1b as shown in Figure 4. In this manner, similarly to the above description, the sealed space between the suction pads 35 and the wall surface 1b is depressurized, the suction strength of the pads 35 increasing reliably to secure the mounting portion 9 of the wall surface 1b. Further, in this mounted state, the water intake ports 30 are at a position above the gravel 4.

In this state, the end portions at the side of the front wall 7 of the mounting portions 8 and 9 of the back wall 6 are in close contact with both wall surfaces 1a and 1b of the water tank 1, and a space between the filter case 3 and the corner 2 is closed. This reliably prevents fish from entering the space between the filter case 3 and the tank walls.

Now, the water suction case 5 is fitted in the bottom of the tank 1. Since a rectangular empty space is provided between the first, second and third portions 53, 54, 55 and the lower case member 52 is formed of Y shaped cross-section, then even if gravel 4 has already been spread over the bottom of the tank 1, the water suction case 5 can be very easily installed by burying it in the gravel 4 by pushing the suction case 5 into the gravel.

After the suction case 5 is fitted, the flexible tube 73 connected to the suction case 5 is connected to the connecting port 37 of the connecting tube 33. This connecting operation is easily carried out in the water, and gravel 4 will not enter the connecting tube 33.

The mounting sequence of the filter case 3 and the water suction case 5 may be reverse to that described above.

When the pressurized air supply source 40 is started, a rising water stream is generated in the suction tube 16. Thus, water sucked from the water intake port 30 into the unpurified water chamber 22 is fed through the filtering material 21 into the purified chamber 23 while being purified, and rises from the suction port 29 in the suction pipe 16 to be further circulated from the outflow port 13 into the tank 1. In this case, since the suction port 29 is provided in the lower part of the suction pipe 16, the entire hydraulic pressure of the depth of water to the suction port 29 from the water surface is applied to the suction port 29 efficiently to pump the water. Therefore the water fed from the unpurified chamber 22 to the purifying chamber 23 is filtered over the entire surface of the filtering material and is efficiently purified.

On the other hand, in response to a rising water stream generated in the suction pipe 16, a water stream from the first passage 61 through the second passages 62 to the third passage 63 is generated in the water suction case 5, the water being filtered through the gravel 4 before entering the suction ports 65, 66, 67 to pass out of the suction case to the flexible tube 73 and the connecting pipe 33.

In this case, since the suction ports 65, 66, 67 are disposed lower than the flange 64, they are in a space formed in the gravel 4 by the flanges 64. In addition, since the suction ports 65 to 67 are relatively small, this prevents gravel 4 from blocking these ports as far as possible.

Since the third passage 63 is of large cross-sectional area, the flowing loss along this passage 63 is extremely small. Therefore, the water flowing quantities of the passages 61 and 62 become equalized, and the gravel 4 can be utilized efficiently to filter the water.

As described above, the filtration by using the gravel 4 and the filtration by using the filtering material 21 are combined in good balance sufficiently to filter the water in the tank 1. In addition, since the water rising in the suction pipe 16 is composed of water purified by the filtering material 21 and water purified by the gravel 4, the velocity of the water fed from the water intake port 30 to pass through the filtering material 21 in the filtering case 3 can be adjusted to a suitable value for accelerating the cultivation of chlorella and aerobic microbes, so that organic substances such as leftover unconsumed food and excreta of aquarium fish can be decomposed by aerobic microbes to prevent clogging of the filtering material 21, the chlorella providing fresh food for the fish.

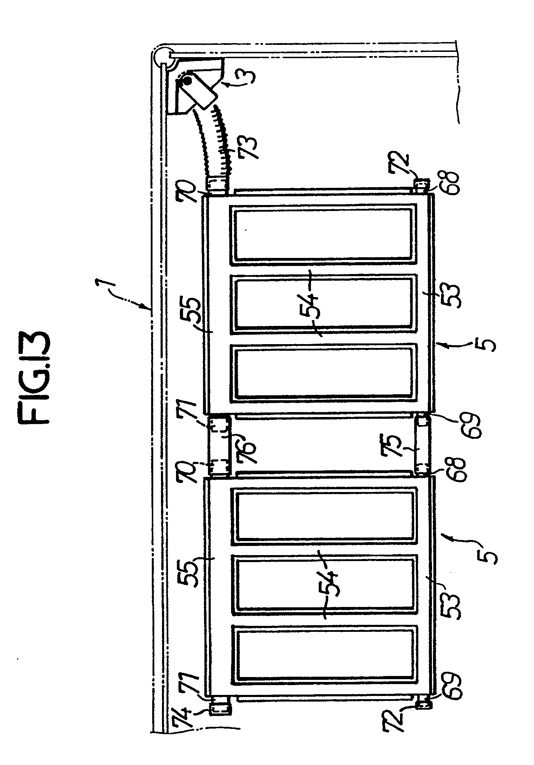

Figure 13 illustrates another embodiment of the present invention, wherein two water suction cases 5, 5 are interconnected to be mounted in the bottom of a water tank 1. A connecting portion 69 of one water suction case 5 and a connecting portion 68 of another water suction case 5 are interconnected by a connecting pipe 75, and the connecting portion 71 of the one water suction case 5 and the connecting portion 70 of the other water suction case 5 are interconnected by the connecting pipe 76.

As described above, a plurality of water suction cases 5 can be interconnected in response to the area of the water tank 1 to adjust the filtering area of the gravel 4.

**Claims**

1. A filtering device adapted to be inserted in a particulate filtering medium (4) arranged over the base of a water tank (1), the device comprising a substantially coplanar arrangement of water flow conduits defining passages (61-63) interconnected in fluid communication to define spaces between the passages (61-63), wherein each conduit has a plurality of apertures (65-67) through which water filtered by the particulate filtering medium can enter the passages (61-63) concerned by suction, characterised in that the device has for each conduit a lower, insertion, portion (52) provided with said apertures (65-57) and an upper, flanged, portion (51) cooperating with the lower insertion portion (52) to define a cavity in the particulate filtering medium (4) to assist flow of water through said apertures (65-67).

2. A filtering device according to claim 1, characterised in that the device comprises a first suction portion (53) extending linearly to form a first passage (61), a plurality of linear second suction portions (54) disposed generally perpendicularly to the first suction portion (53) to form second passages (62) and a third suction portion (55) disposed generally parallel to the first suction portion (53) to form a third suction passage (63) of larger cross-sectional area than the first and second passages (61, 62), flanges (64) projecting on each side of the suction portions (53-55) and the apertures (65-67) being at positions below the flanges in the normal, generally flat, position of use of the device.

3. A filtering device according to claim 2, wherein said first, second and third suction portions (53-55) are formed at their lower portions (52) with a Y-shaped cross-section.

4. A filtering arrangement comprising the device of claim 1, 2 or 3, an elongate filter case (3) having at one end a plurality of water intake ports (32), the case being detachably mounted in an upright position on a wall surface of the tank (1) in such a manner that the ports (32) are positioned at the lower end of the case but above the particulate filtering medium (4) and containing filtering material (21) which defines therein an unpurified chamber (22) communicating with the water intake ports (32) and a purifying chamber (23), and pumping means (38) communicating with the purifying chamber (23) and connected to the third passage (63) of the filtering device (5) through a connecting pipe (33).

5. A filtering arrangement according to claim 4, wherein a suction pad on the lower end of the connecting pipe (33) which is closed but is provided with a port (37), detachably attaches to the bottom surface of the tank (1), the port (37 being connected through a flexible pipe (73) to the filtering device (5).

## Patentansprüche

1. Filtriergerät, geeignet zum Einstellen in ein Teilchenfiltermaterial (4), welches am Boden eines Wassertanks (1) ausgelegt ist, wobei das Gerät eine im wesentlichen koplanare Anordnung von Wasserleitungen aufweist, welche kommunizierend miteinander verbunden Durchlässe (61-63) bilden, um Freiräume zwischen den Durchlässen (61-63) zu erhalten, wobei Jede Leitung eine Vielzahl von Öffnungen (65-67) aufweist, durch die in dem Teilchenfiltermaterial gefiltertes Wasser in die Durchlässe (61-63) durch Ansaugen eintreten kann, **dadurch gekennzeichnet,** daß das Gerät für Jede Leitung ein unteres, einsetzbares Teil (52), welches die Öffnungen (65-67) aufweist, und ein oberes, mit Flanschen versehenes Teil (51) aufweist, welches mit dem unteren einsetzbaren Teil (52) so zusammenwirkt, daß ein Hohlraum in dem Teilchenfiltermaterial (4) gebildet wird, damit der Durchfluß von Wasser durch die Öffnungen (65-67) unterstützt wird.

2. Filtriergerät nach Anspruch 1, **dadurch gekennzeichnet,** daß das Gerät einen ersten Ansaugbereich (53), der sich geradlinig erstreckt, um einen ersten Durchlaß (61) zu bilden, eine Vielzahl von geraden zweiten Ansaugbereichen (54), die im allgemeinen senkrecht zu dem ersten Ansaugbereich (53) verlaufen, um zweite Durchlässe (62) zu bilden, und einen dritten Ansaugbereich (55) aufweist, der im allgemeinen parallel zu dem ersten Ansaugbereich (53) angeordnet ist, um einen dritten Ansaugdurchlaß (63) mit größerer Querschnittsfläche als die ersten und zweiten Durchlässe (61, 62) zu bilden, wobei Flansche (64) auf Jeder Seite der Ansaugbereiche (53-55) herausragen und die Öffnungen (65-67) sich in der normalen, im allgemeinen flachen Betriebsstellung des Geräts an Positionen unterhalb der Flansche befinden.

3. Filtriergerät nach Anspruch 2, wobei die ersten, zweiten und dritten Ansaugbereiche (53-55) an ihrem unteren Teil (52) mit Y-förmigem Querschnitt gebildet sind.

4. Filtrieranordnung mit dem Gerät nach einem der Ansprüche 1, 2 oder 3, einem länglichen Filtergehäuse (3), welches an einem Ende eine Vielzahl von Wasseraufnahmeöffnungen (32) aufweist, wobei das Gehäuse in einer aufrechten Stellung abnehmbar an einer Wandfläche des Tanks (1) so angebracht ist, daß sich die Öffnungen (32) am unteren Ende des Gehäuses, aber oberhalb des Teilchenfiltermaterials (4) befinden, und das Gehäuse Filtermaterial (21) enthält, welches darin eine ungereinigte Kammer (22), die mit den Wassereinlaßöffnungen (32) kommuniziert, und eine gereinigte Kammer (23) aufweist, und wobei eine Pumpeinrichtung (38) mit der gereinigten Kammer (23) kommuniziert und mit dem dritten Durchlaß (63) des Filtriergeräts (5) durch ein Verbindungsrohr (33) verbunden ist.

5. Filtrieranordnung nach Anspruch 4, wobei ein Saugstreifen am unteren Ende des Verbindungsrohrs (33), welches geschlossen aber mit einer Auslaßöffnung (37) versehen ist, sich abnehmbar an der Bodenfläche des Tanks (1) festsetzt, wobei die Auslaßöffnung (37) durch ein flexibles Rohr (73) mit dem Filtriergerät (5) verbunden ist.

**Revendications**

1. Appareil de filtration apte à être inséré dans un milieu de filtration constitué par des particules et installé au-dessus du fond d'un réservoir d'eau (1), l'appareil comprenant un agencement sensiblement coplanaire de conduits d'écoulement d'eau définissant des passages (61 à 63) interconnectés en ce qui concerne la communication pour les fluides afin de définir des espaces entre les passages (61 à 63) chaque conduit ayant une pluralité d'ouvertures (65 à 67) à travers lesquelles l'eau filtrée par le milieu de filtration constitué par des particules peut pénétrer dans les passages concernés (61 à 63) par aspiration, caractérisé en ce que l'appareil comporte pour chaque conduit une partie inférieure d'insertion (52) munie desdites ouvertures (65 à 67), et une partie supérieure (51), munie d'un rebord qui coopère avec la partie inférieure d'insertion (52) en vue de définir une cavité dans le milieu de filtration (4) constitué par des particules afin d'aider à l'écoulement de l'eau dans lesdites ouvertures (65 à 67).

2. Appareil de filtration selon la revendication 1, caractérisé en ce que l'appareil comprend une première partie d'aspiration (53) qui s'étend linéairement afin de former un premier passage (61), une pluralité de secondes parties d'aspiration (54) linéaires, disposées généralement perpendiculairement à la première partie d'aspiration (53) afin de former des seconds passages (62), et une troisième partie d'aspiration (55) disposée généralement parallèlement à la première partie d'aspiration (53) en vue de former un troisième passage d'aspiration (63) d'une section transversale plus importante que celle des premier et second passages (61, 62), des rebords (64) faisant saillie de chaque côté des parties d'aspiration (53 à 55) et des ouvertures (65 à 67) étant réalisées à des emplacements situés en dessous des rebords dans la position d'utilisation normale, généralement plate, de l'appareil.

3. Appareil de filtration selon la revendication 2, dans lequel lesdites première, seconde et troisième parties d'aspiration (53 à 55) comportent à leurs parties inférieures (52) une section transversale en forme de Y.

4. Agencement de filtration comprenant l'appareil des revendications 1, 2 ou 3, un boîtier (3) de filtre oblong étant muni à une de ses extrémités d'une pluralité d'orifices d'entrée d'eau (32), le boîtier étant monté de façon détachable dans une position verticale sur une surface de paroi du réservoir (1) d'une manière telle que les orifices (32) sont positionnés à l'extrémité inférieure du boîtier, mais cependant au-dessus du milieu de filtration (4) constitué par des particules, et contenant un matériau de filtration (21) dans lequel sont définis une chambre non purifiée (22) qui communique avec les orifices (32) d'entrée d'eau et une chambre de purification (23), ainsi que des moyens de pompage (38) communiquant avec la chambre de purification (23) et étant reliés au troisième passage (63) du dispositif de filtration (5) par l'intermédiaire d'un tube de connexion (33).

5. Agencement de filtration selon la revendication 4 dans lequel un tampon d'aspiration, situé à l'extrémité inférieure du tuyau de connexion (33), laquelle est fermée mais est munie d'un orifice (37), est fixé de façon détachable à la surface du fond du réservoir (1), l'orifice (37) étant relié au dispositif de filtration (5) par un tuyau souple (73).

# FIG.1

# FIG.2

# FIG.3

# FIG.4

# FIG.5

# FIG.6

FIG.7

EP 0 341 356 B1

# FIG.8

# FIG.9

EP 0 341 356 B1

# FIG.10

# FIG.11

# FIG.12(a)

# FIG.12(b)

FIG.13